Europäisches Patentamt

European Patent Office

Office européen des brevets

(19)

(11) Numéro de publication : **0 021 969**

**B1**

(12)
# FASCICULE DE BREVET EUROPÉEN

(45) Date de publication du fascicule du brevet :
22.06.83

(51) Int. Cl.³ : **B 60 T 13/24**

(21) Numéro de dépôt : **80400867.0**

(22) Date de dépôt : **13.06.80**

(54) **Servomoteur d'assistance au freinage.**

(30) Priorité : **15.06.79 FR 7915413**

(43) Date de publication de la demande :
**07.01.81 Bulletin 81/01**

(45) Mention de la délivrance du brevet :
**22.06.83 Bulletin 83/25**

(84) Etats contractants désignés :
**BE DE FR GB IT NL SE**

(56) Documents cités :
**FR A 1 230 198**
**FR A 1 527 482**
**FR A 2 076 172**
**FR A 2 225 319**
**FR A 2 283 804**
**GB A 2 017 852**

(73) Titulaire : **SOCIETE ANONYME D.B.A.**
**Centre Paris Pleyel**
**F-93521 St-Denis Cedex 01 (FR)**

(72) Inventeur : **Carré, Jean-Jacques**
**100 Avenue du Président Wilson**
**F-93100 Montreuil (FR)**
Inventeur : **Meyer, Yves**
**3, Allée du Pré Fleuri**
**F-95150 Taverny (FR)**

(74) Mandataire : **Poidatz, Emmanuel et al**
**Service Brevets Bendix 44 rue François 1er**
**F-75008 Paris (FR)**

Servomoteur d'assistance au freinage

La présente invention a pour objet un perfectionnement aux servomoteurs d'assistance au freinage du type à dépression, et plus particulièrement les servomoteurs d'assistance au freinage destinés à être disposés entre une cloison fixe du véhicule et un maître-cylindre et comportant un boîtier dans lequel se déplace un ensemble formant piston-moteur divisant le boîtier en une chambre destinée à être reliée à une source de vide et une chambre destinée à être reliée à l'atmosphère ou au vide par une valve contrôlant les déplacements dudit piston-moteur qui est associable directement au maître-cylindre et, par l'intermédiaire de moyens de réaction, à une tige de poussée commandée par la pédale de frein du véhicule, le boîtier étant constitué de deux coquilles en tôle métallique comportant chacune à sa périphérie une virole par laquelle elle est reliée à l'autre de façon étanche, et également chacune une paroi d'extrémité centrale annulaire transversale, coaxiale à ladite virole, et des moyens de liaison avec le maître-cylindre pour l'une des coquilles et avec la cloison fixe pour l'autre coquille, au moins une des viroles étant reliée au bord extrême de la paroi d'extrémité annulaire correspondante par un voile de liaison venu de matière avec la virole et/ou la paroi d'extrémité annulaire. Un boîtier de servomoteur de ce type est représenté sur les dessins du document FR-A-1 527 482.

Dans les servomoteurs du type à dépression existants, l'importance des efforts exercés sur le boîtier est telle que, pour la réalisation des coquilles de ce dernier, il est nécessaire d'employer des tôles de relativement forte épaisseur dont résulte un poids élevé de l'ensemble du servomoteur.

L'invention a pour but de proposer un agencement de boîtier de servomoteur permettant de réduire le poids de tels servomoteurs tout en leur conservant une bonne résistance mécanique.

A cet effet, l'invention propose un servomoteur d'assistance au freinage du type défini ci-dessus, dans lequel le voile de liaison est mince et a un profil en section suivant un plan radial se présentant sensiblement sous la forme d'un segment de parabole présentant sa concavité vers l'extérieur, de sorte que les contraintes composées au cisaillement et à la traction y soient inférieures à la contrainte limite élastique en traction simple pour toutes les sections élémentaires du voile de liaison.

L'invention sera mieux comprise à la lecture de la description qui va suivre et qui se réfère aux dessins annexés dans lesquels :

la figure 1 est une vue en coupe longitudinale d'un servomoteur selon un mode de réalisation préféré de l'invention ;

la figure 2 montre schématiquement les efforts appliqués au boîtier d'un servomoteur en cas de défaillance de l'assistance au freinage ; et

la figure 3 montre schématiquement la répartition des contraintes dans le profil selon un plan radial de l'une des coquilles du servomoteur des figures 1 et 2.

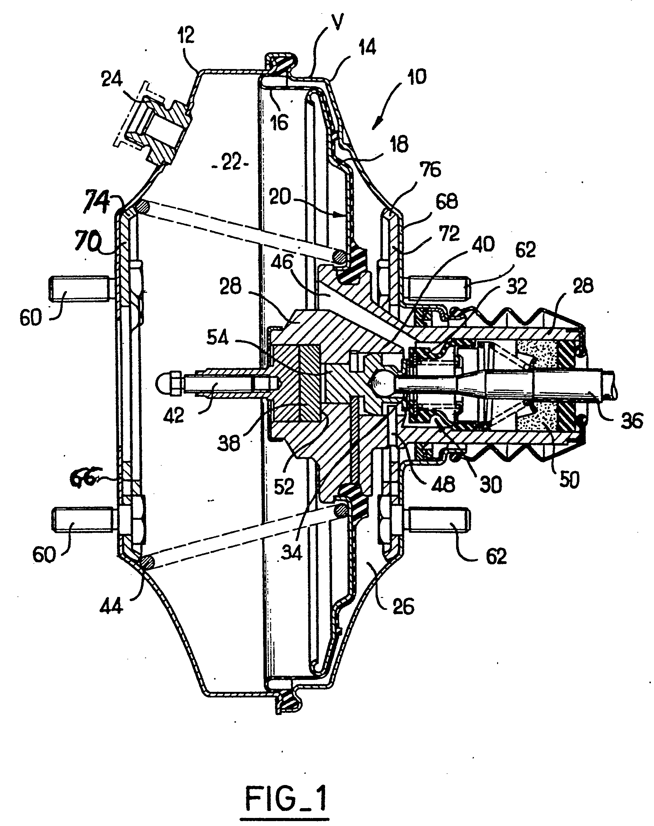

Le servomoteur d'assistance illustré à la figure 1 est du type pneumatique à dépression. Il comporte un boîtier 10 formé de deux coquilles 12 et 14 solidaires à leur périphérie et emprisonnant la partie périphérique d'une membrane souple 16 formant avec un plateau rigide 18 un ensemble piston moteur 20. Le piston moteur 20 sépare le boîtier en deux chambres, une chambre basse pression 22 communiquant en permanence avec une source à vide par l'intermédiaire d'un clapet anti-retour 24 et une chambre haute pression 26. Le plateau 18 comporte un noyau 28 qui fait saillie à l'extérieur du boîtier. Dans ce noyau 28 est disposé un dispositif de valve de commande 30 du type à trois voies. La valve de commande 30 comporte d'une part un clapet annulaire 32 susceptible de venir alternativement en appui sur un siège mobile 34 solidaire d'un organe de commande d'entrée 36 et associé à un dispositif de réaction 38 composé d'une rondelle de caoutchouc, et d'autre part un siège 40, fixe par rapport au piston moteur. Une des faces du disque de réaction 38 est en contact avec une extrémité d'une tige de poussée 42 qui est susceptible de mettre en œuvre une commande extérieure (non représentée) telle que par exemple un maître-cylindre de freinage de véhicule automobile. Un ressort 44 prenant appui sur le boîtier sollicite le piston-moteur 20 dans sa position de repos en appui sur la coquille 14. Lorsque le servomoteur est dans sa position de repos telle que représentée, le clapet 32 est dégagé du siège 40 de façon à permettre aux deux chambres 22 et 26 de communiquer par l'intermédiaire de passages tels que 46 et 48 à travers le noyau 28. Par contre, le clapet 32 étant en appui étanche avec le siège 34, la communication entre l'atmosphère et la chambre haute pression 26 est interrompue.

Le servomoteur à dépression tel qu'il vient d'être décrit est d'un type classique et fonctionne comme suit :

Lorsque le conducteur du véhicule sollicite la pédale de frein, la tige 36 est déplacée vers la gauche de la figure 1 de façon à permettre au clapet annulaire 32 de prendre appui sur le siège 40 et d'interrompre la communication entre les chambres de basse pression 22 et de haute pression 26 et de dégager le clapet 32 du siège 34 pour permettre ainsi à l'air atmosphérique de traverser un filtre 50, la partie centrale du clapet 32 et de pénétrer dans la chambre haute pression 26 par le passage 48. Il en résulte la création d'une différence de pression entre les deux chambres qui entraîne un mouvement du piston-moteur 20 vers la gauche de la figure 1 et qui, compte tenu de la présence de l'épaulement 52 dans le noyau 28, permet de déplacer la tige de sortie 42 également vers la gauche de la figure 1. La réaction est transmise de la tige de sortie 42 à la tige d'entrée par l'intermédiaire du disque 38 agissant sur un prolongement 54 solidaire du siège 34. On remarquera que le dispositif de valve 30 est du type suiveur, c'est-à-dire que les déplacements des divers organes mobiles de la valve de contrôle se font par rapport au piston-moteur 20.

En cas de défaillance du servo-moteur, due par exemple à une absence de dépression, le conducteur du véhicule peut continuer à commander le maître-cylindre au prix d'un effort très grand exercé sur la pédale. Il enfonce l'organe de poussée 36, que sollicite le prolongement 54 contre la rondelle de réaction 38, laquelle transmet l'effort à la tige de poussée 42 qui coopère avec le maître-cylindre (non représenté).

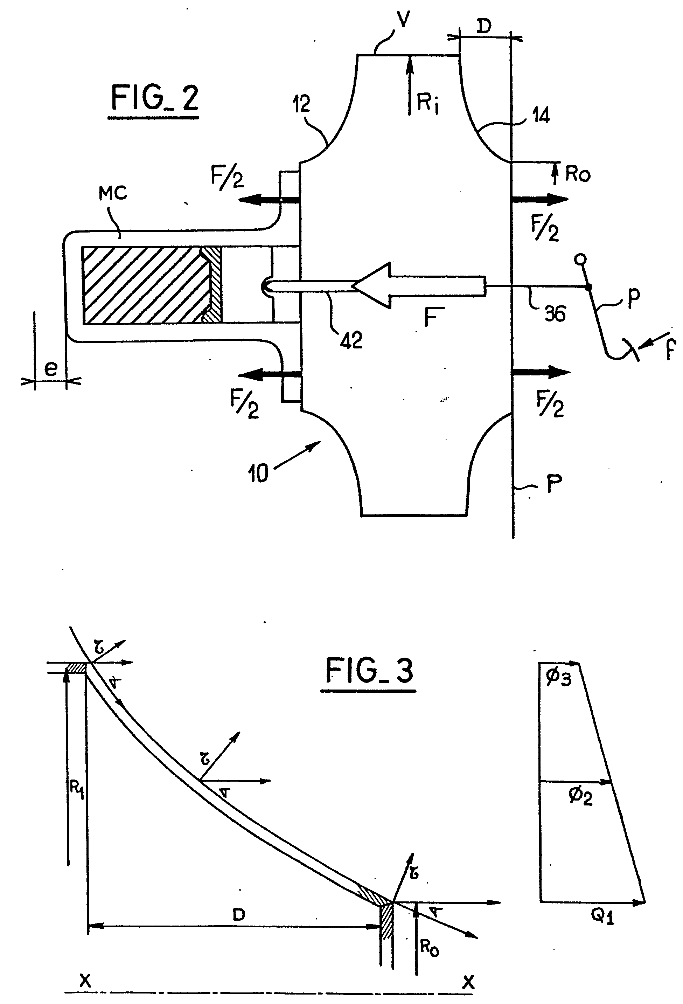

On a montré sur le schéma de la figure 2 les diverses forces auxquelles est soumis le boîtier du servomoteur lors de l'actionnement (non assisté) des freins du véhicule dans de telles conditions.

Pour un effort « f » exercé sur la pédale « p », l'organe d'entrée 36 transmet à la tige de poussée une force « F » égale à l'effort « f » multiplié par le rapport de pédale.

La force « F » a tendance à écarter le maître-cylindre « MC » de la coquille 12, elle exerce une traction « F/2 » sur chacune des deux vis de fixation 60. On a montré également sur la figure 2, les forces de réaction (F/2) appliquées à la cloison « P » du véhicule sur lequel est monté l'ensemble servomoteur/maître-cylindre par les deux vis de fixation 62.

Le fonctionnement dans de telles conditions soumet le boîtier à des efforts très importants dont résulte l'écartement des coquilles 12 et 14 et l'avancement du maître-cylindre « MC » d'une valeur correspondante « e » (vers la gauche sur la figure 2).

Parmi les essais auxquels sont soumis les servo-moteurs du type décrit, il en existe un qui impose que la distance « e » reste inférieure à 1, 5 mm pour un effort sur la pédale « p » de 200 daN auquel correspond une force « F » égale à 1 000 daN. Pour satisfaire une telle condition, on a été conduit à réaliser des boîtiers d'épaisseur relativement grande et par conséquent d'un poids élevé.

L'invention se propose d'obtenir un boîtier qui soit le plus léger possible pour une déformation « e » restant dans les limites imposées.

Les caractéristiques du servomoteur (section du piston-moteur) contribuent à imposer le rayon « R », de la virole externe « V » de chaque coquille 12 ou 14, le rayon « $R_o$ » de la paroi latérale de fixation au maître-cylindre ou à la cloison « P » de même que la distance « D » mesurée parallèlement à l'axe du servomoteur entre ladite paroi latérale et le raccordement avec la virole « V ».

Une autre condition que s'est fixée le constructeur de servomoteurs est l'utilisation de tôle de faible épaisseur formée à la presse.

Dans un boîtier où la virole serait directement reliée au bord de la paroi latérale d'extrémité (c'est-à-dire $R_1 = R_o$) la virole est soumise à des efforts de traction pure alors que la paroi latérale est surtout soumise à des efforts de cisaillement ; il en résulte l'utilisation de tôle d'épaisseur suffisante pour réaliser la paroi latérale mais surabondante pour réaliser la virole.

Dans le cas d'un boîtier ayant sensiblement les formes géométriques générales du dessin de la figure 1, une liaison entre la paroi 66 (ou 68) et la virole « V » par un tronc de cône nécessite une tôle relativement épaisse car elle doit résister à des contraintes combinées où prédominent les contraintes au cisaillement.

Selon l'invention, on utilise une surface de liaison dans laquelle les contraintes au cisaillement et à la traction se répartissent harmonieusement de sorte qu'en tout point du boîtier la contrainte résultante, dite « équivalente » qui est la combinaison des contraintes en ce point soit inférieure à la contrainte de limite élastique en traction simple de la tôle.

Cette bonne répartition est obtenue pour un profil qui, pris selon un plan radial d'intersection d'une coquille, est sensiblement un segment de parabole dont la concavité est dirigée vers l'extérieur de la coquille. Un tel profil a été obtenu empiriquement par déformation permanente d'une tôle mince à faible limite élastique.

Avec ce profil, « isocontrainte », il est possible de faire travailler le métal du boîtier en vérifiant la formule dite de la théorie du cisaillement maximum

$$\sqrt{\sigma^2 + 4\tau^2} = \text{Constante}$$

$\sigma$ étant la contrainte de limite élastique en traction simple et

$\tau$ étant la contrainte de limite élastique en cisaillement pur.

On a montré schématiquement sur la figure 3 pour des forces $\phi_1$, $\phi_2$ et $\phi_3$ (qui vont en décroissant linéairement pour des rayons croissants) les combinaisons obtenues pour $\tau$ et $\sigma$ grâce au profil « isocontrainte ».

Les deux coquilles 12-14 étant réalisées par emboutissage d'une tôle fine d'épaisseur constante, leur fond ou paroi d'extrémité 66-68 s'étendant dans un plan transversal est soumis à des contraintes de cisaillement qui sont encaissées par des anneaux de renforcement 70-72. Le bord 74-76 des anneaux est rabattu pour venir coopérer avec le voile de liaison à profil « isocontrainte ». Cette coopération doit être parfaite si l'on veut éviter une détérioration de l'appareil à cet emplacement. Les anneaux 70-72 sont de préférence réalisés en aluminium. Leur bord rabattu contribue de plus à leur conférer une bonne résistance mécanique. Ils sont solidaires des vis de fixation de liaison au maître-cylindre (60) ou à la cloison fixe (62) respectivement.

On notera que les parois d'extrémité annulaires 66 et 68 et les renforts 70 et 72 ne sont pas nécessairement définis par des cercles interne et externe coaxiaux à la virole « V ». La configuration circulaire est avantageuse lors de l'utilisation de quatre vis de fixation (60 ou 62) mais une forme de losange, carré, rectangle ou autre peut être intéressante dans certaines applications. Dans ce dernier cas, le voile de raccordement sera constitué par une famille de profils paraboliques dans lesquels la loi d'isocontrainte sera respectée.

Avec le perfectionnement qui vient d'être décrit, il est possible de réaliser le boîtier d'un servomoteur en tôle d'acier doux de 0,5 mm d'épaisseur alors qu'on utilisait jusqu'à présent une tôle de 1,5 mm pour obtenir une résistance comparable. La réduction du poids qui en résulte est de l'ordre de 50 %.

**Revendications**

1. Servomoteur d'assistance au freinage du type à dépression, destiné à être disposé entre une cloison fixe du véhicule et un maître-cylindre (MC) et comportant : un boîtier (10) dans lequel se déplace un ensemble formant piston-moteur (20) divisant le boîtier en une chambre (22) destinée à être reliée à une source de vide et une chambre (26) destinée à être reliée à l'atmosphère ou au vide par une valve (30) contrôlant les déplacements dudit piston-moteur qui est associable directement au maître-cylindre et, par l'intermédiaire de moyens de réaction (38), à une tige de poussée (36) commandée par la pédale de frein (8) du véhicule, le boîtier étant constitué de deux coquilles (12, 14) en tôle métallique comportant chacune à sa périphérie une virole (V) par laquelle elle est reliée à l'autre de façon étanche, et également chacune une paroi d'extrémité centrale annulaire transversale (66, 68), coaxiale à ladite virole, et des moyens (60, 62) de liaison avec le maître-cylindre pour l'une (12) des coquilles et avec la cloison fixe pour l'autre coquille (14), au moins une des viroles étant reliée au bord extrême de la paroi annulaire correspondante par un voile de liaison venu de matière avec la virole et/ou la paroi annulaire, caractérisé en ce que le voile de liaison est mince et a un profil en section suivant un plan radial se présentant sensiblement sous la forme d'un segment de parabole présentant sa concavité vers l'extérieur, de sorte que les contraintes composées au cisaillement et à la traction y soient inférieures à la contrainte limite élastique en traction simple pour toutes les sections élémentaires du voile de liaison.

2. Servomoteur selon la revendication 1, caractérisé en ce que le voile de liaison a une épaisseur constante.

3. Servomoteur selon la revendication 2, caractérisé en ce que le profil précité a une forme telle que les contraintes au cisaillement $\tau$ et à la traction $\sigma$ sont liées par la formule :

$$\sqrt{\sigma^2 + 4\tau^2} = \text{Constante.}$$

4. Servomoteur selon l'une quelconque des revendications précédentes, caractérisé en ce que les coquilles (12, 14) sont réalisées par emboutissage d'une feuille mince de métal.

5. Servomoteur selon l'une quelconque des revendications précédentes, caractérisé en ce qu'au moins une des coquilles (12, 14) est renforcée par application contre la paroi d'extrémité annulaire correspondante (66, 68) d'un élément en forme d'anneau (70, 72) sensiblement de mêmes dimensions, disposé à l'intérieur de la coquille et comportant un bord externe (74, 76) rabattu vers l'intérieur qui coopère avec le bord de plus petites dimensions radiales du voile de liaison correspondant.

6. Servomoteur selon la revendication 5, caractérisé en ce que l'élément en forme d'anneau (70, 72) porte des moyens de fixation (60, 62) pour la fixation au maître-cylindre (MC) ou à la cloison fixe du véhicule.

**Claims**

1. A brake assistance servo motor of the vacuum type, adapted to be disposed between a fixed wall of the vehicle and a master cylinder (MC) and comprising : a casing (10) in which an assembly forming a piston actuator (20) is displacable, which assembly divides the casing in a chamber (22) adapted to be connected to a vacuum source and a chamber (26) adapted to be connected to atmosphere or to the vacuum by a valve (30) controlling the displacements of the piston actuator which can be associated directly to the master cylinder and via reaction means (38) to a push rod (36) controlled by the brake pedal (8) of the vehicle, the casing being comprised of a pair of shells (12, 14) of sheet metal, each comprising at its periphery a ring portion (V) by which they are connected to each other in a sealedmanner, and each comprising a central annular transverse end wall (66, 68) coaxial to said ring portion, and fixation means (60, 62) for connecting one (12) of the shells to the master cylinder and the other shell (14) to the fixed wall, at least one of the ring portions being connected to the extreme edge of the corresponding annular wall by a connection web integral with the ring portion and/or the annular wall, characterized in that the connection web is thin and has, in a cross section along a radial plane, a profile substantially in the form of a parabolic section having its concavity directed outwardly such that the combined shear and tensile stresses are smaller than the simple tensile stress limit of elasticity for all elementary sections of the connection web.

2. The servo motor of claim 1 characterized in that the connection web is of a constant thickness.

3. The servo motor of claim 2 characterized in that the said profile has a shape such that the shear stresses $\tau$ and the tensile stresses $\sigma$ are combined according to the formula :

$$\sqrt{\sigma^2 + 4\tau^2} = \text{constant.}$$

4. The servo motor of any of the preceding claims characterized in that the shells (12, 14) are made by stamping a thin metal sheet.

5. The servo motor of any of the preceding claims characterized in that at least one of the shells (12, 14) is renforced by applying against the corresponding annular end wall (66, 68), an annular element (70, 72) of substantially the same dimensions as the end wall, the annular element being disposed at the inner side of the shell and comprising an outer edge (74, 76) bent towards the interior, which outer edge cooperates with the edge of the smallest radial dimensions of the corresponding connection web.

6. The servo motor of claim 5 characterized in that the annular element (70, 72) supports fixation means (60, 62) for connection to the master cylinder (MC) or to the fixed wall of the vehicle.

**Ansprüche**

1. Nach dem Unterdruckprinzip arbeitender Bremshilfskraft-Servomotor zum Einbau zwischen einer festen Wand des Fahrzeuges und einem Hauptbremszylinder (MC), mit einem Gehäuse (10), in dem ein Betätigungskolben (20) verschiebbar ist, der das Gehäuse in eine Kammer (22), die mit einer Vakuumquelle verbindbar ist, und eine Kammer (26) unterteilt, die mit der Atmosphäre oder dem Vakuum durch ein Ventil (30) verbindbar ist, wobei das Ventil die Verschiebungen des Betätigungskolbens steuert, der direkt dem Hauptbremszylinder und über Reaktionsmittel (38) einer vom Bremspedal (8) des Fahrzeuges gesteuerten Schubstange (36) zugeordnet ist, wobei das Gehäuse von zwei Schalen (12, 14) aus Blech gebildet ist, die jeweils an ihrem Umfang einen Ring (V), durch den sie abgedichtet miteinander verbunden sind, jeweils eine zentrale, ringförmige, querverlaufende zu dem Ring koaxiale Stirnwand (66, 68) aufweisen, und mit Verbindungsmittel (60, 62) durch die die eine Schale (12) mit dem Hauptbremszylinder und die andere Schale (14) mit der festen Wand verbindbar ist, wobei mindestens einer der Ringe mit dem zugehörigen Außenrand der entsprechenden Stirnwand durch eine Verbindungwand verbunden ist, die aus dem Material des Ringes und/oder der Stirnwand hergestellt ist, dadurch gekennzeichnet, daß die Verbindungswand dünn ist und in einer Radialebene ein Querschnittsprofil besitzt, das im wesentlichen die Form eines Parabelsegmentes hat, das nach außen konkav ist, derart, daß die zusammengesetzten Scher- und Zugspannungen kleiner sind als die einfache Zugspannungs-Elastizitätsgrenze für sämtliche elementaren Schnitte der Verbindungswand.

2. Bremshilfskraft-Servomotor nach Anspruch 1, dadurch gekennzeichnet, daß die Verbindungwand eine konstante Dicke hat.

3. Bremshilfskraft-Servomotor nach Anspruch 2, dadurch gekennzeichnet, daß das besagte Profil eine solche Form hat, daß die Scherspannungen $\tau$ und die Zugspannungen $\sigma$ durch folgende Formel miteinander verknüpft sind :

$$\sqrt{\sigma^2 + 4\tau^2} = \text{konstant}$$

4. Bremshilfskraft-Servomotor nach einem der vorhergehenden Ansprüche, dadurch gekennzeichnet, daß die Schalen (12, 14) durch Tiefziehen einer dünnen Metallfolie hergestellt sind.

5. Bremshilfskraft-Servomotor nach einem der vorhergehenden Ansprüche, dadurch gekennzeichnet, daß mindestens eine der Schalen (12, 14) dadurch verstärkt ist, daß an der entsprechenden Stirnwand (66, 68) ein ringförmiges Element (70, 72) von im wesentlichen den gleichen Abmessungen anliegt, das im Inneren der Schale angeordnet ist und einen Außenrand (74, 76) aufweist, der nach innen umgebogen ist und mit dem Rand kleinster radialer Abmessungen der zugehörigen Verbindungswand zusammenwirkt.

6. Bremshilfskraft-Servomotor nach Anspruch 5, dadurch gekennzeichnet, daß das ringförmige Element (70, 72) Befestigungsmittel (60, 62) zur Befestigung am Hauptbremszylinder (MC) oder an der festen Wand des Fahrzeuges trägt.

FIG_1

FIG_2

FIG_3